# EUROPÄISCHE PATENTSCHRIFT

(11) **EP 3 658 791 B1**
(45) Veröffentlichungstag und Bekanntmachung des Hinweises auf die Patenterteilung: **01.09.2021**
(21) Anmeldenummer: 18756146.9
(22) Anmeldetag: 23.07.2018
(51) Int. Cl.: F16C 17/10, F03D 80/70, F16C 27/02, F16C 33/08

(54) **GLEITLAGERVORRICHTUNG**
SLIDING BEARING DEVICE
DISPOSITIF DE PALIER GLISSANT

(30) Priorität: 25.07.2017 DE 102017006957
(43) Veröffentlichungstag der Anmeldung: 03.06.2020
(73) Patentinhaber: Rheinisch-Westfälische Technische Hochschule Aachen, 52062 Aachen (DE)
(72) Erfinder: SCHRÖDER, Tim, 52064 Aachen (DE)
(74) Vertreter: Cohausz Hannig Borkowski Wißgott
(86) Internationale Anmeldenummer: PCT/EP2018/000368
(87) Internationale Veröffentlichungsnummer: WO 2019/020213

(56) Entgegenhaltungen:
- EP-A1- 2 863 076
- US-A- 1 805 992
- US-A- 4 260 205
- US-A1- 2011 057 451
- US-A1- 2013 287 574

## Beschreibung

Die Erfindung betrifft eine Gleitlagervorrichtung umfassend ein inneres Ringelement und ein äußeres Ringelement, wobei zwischen dem inneren und äußeren Ringelement zwei axial beabstandete Gleitlager ausgebildet sind, wobei die Gleitlagerflächen dieser beiden axial beabstandeten Gleitlager nicht parallel zueinander und jeweils in einem Winkel ungleich Null Grad und/oder ungleich 90 Grad zur Drehachse der Gleitlagervorrichtung angeordnet sind, wobei in jedem der beiden Gleitlager eine der beiden zusammenwirkenden Gleitlagerflächen eine in Umfangsrichtung kontinuierliche Fläche ausbildet und die andere der beiden zusammenwirkenden Gleitlagerflächen durch in Umfangsrichtung nebeneinander angeordnete Gleitlager-Pads ausgebildet ist.

Unter der axialen Beabstandung der beiden Gleitlager wird verstanden, dass diese einen Abstand zueinander aufweisen in Richtung der Drehachse, wobei die beiden jeweiligen Ringelemente um diese Drehachse herum ausgebildet bzw. angeordnet sind.

Unter der Ausbildung der Gleitlagerflächen nicht parallel zueinander und in einem Winkel ungleich 0 Grad und/oder ungleich 90 Grad zur Drehachse wird bevorzugt verstanden, dass diese genannten Orientierungen vorliegen, wenn die Gleitlageranordnung in einem Schnitt parallel durch die Drehachse betrachtet wird, also in einer Schnittebene, welche die Drehachse selbst umfasst. Bevorzugt gilt diese benannte Orientierung für jede mögliche Ebene parallel durch die Drehachse, wodurch sich implizit ergibt, dass die Gleitlagerflächen der beiden axial beabstandeten Gleitlager im Wesentlichen kegelformartig ausgebildet sind.

Hierbei wird diejenige Gleitlagerfläche, die eine in Umfangsrichtung kontinuierliche Fläche ausbildet einen Kegelabschnitt ausbilden, wobei diejenige Gleitlagerfläche, die in Umfangsrichtung aus nebeneinander angeordneten Gleitlager-Pads ausgebildet ist eine durch die Pads segmentierte Kegelabschnitt-Fläche bildet. Hierbei entspricht somit die Gleitlagerfläche eines jeden Pads einem Oberflächensegment eines Kegelabschnittes.

Die Kegelabschnitte der beiden axial beabstandeten Gleitlager weisen bevorzugt mit ihren sich verjüngenden Bereichen aufeinander zu.

Eine Gleitlagervorrichtung der eingangs genannten Art ist zum Beispiel bekannt aus der Publikation WO 2011/127510 A1. Die hier beschriebene Gleitlagervorrichtung ist ebenso vorgesehen für die Lagerung einer Rotornabe einer Windkraftanlage, wie es auch die bevorzugte Anwendung der Erfindung ist. Die Erfindung ist jedoch grundsätzlich nicht auf dieser Anwendung beschränkt, sondern kann auch zur Lagerung anderer rotierter Elemente eingesetzt werden.

Der hier benannte Stand der Technik sieht es vor, die Gleitlager-Pads vollflächig am äußeren Ringelement anzuordnen, wobei ein unmittelbarer Kontakt zwischen der Gleitlager-Pad Rückfläche und einer Fläche des Ringelementes vorgesehen ist. Mittels einer in radialer Richtung mit dem äußeren Ringelement verschraubten Schraube und damit verwendeten Beilagscheiben werden die Gleitlager-Pads mit dem äußeren Ringelement verschraubt und bilden mit diesem eine in sich starre Gesamteinheit. Als Vorteil wird es hier unter anderem beschrieben, dass bei Verschleiß die Gleitlager-Pads ersetzt werden können.

Mit einer Gleitlageranordnung dieser Art mit den unter einem Winkel zueinander stehenden Gleitlagerflächen der beiden axial beabstandeten Gleitlager wird erreicht, dass das sich drehende Element, wie zum Beispiel die Rotornarbe sowohl in radialer Richtung als auch in axialer Richtung örtlich festgelegt ist. Der Winkel, den die Gleitlagerflächen in der benannten Schnittbetrachtung mit der Drehachse einschließen, liegt bevorzugt im Bereich von 30 Grad bis 75 Grad weiter bevorzugt im Bereich von 35 bis 55 Grad.

EP 2 863 076 A1 offenbart eine Gleitlagervorrichtung gemäß dem Oberbegriff des Anspruchs 1.

US 2013/287574 A1, US 1 805 992 A, US 4 260 205 A und US 2011/057451 offenbaren andere Arten von Gleitlagervorrichtungen.

Als problematisch ist es der Anmelderin aufgefallen, dass bei einer Belastung der Rotornabe, wie zum Beispiel durch die Gewichtskraft des Rotors, aber auch bei auftretenden Windlasten eine Verkippung der Drehachse der Rotornabe gegenüber der vorgesehenen Drehachse vorliegt, in welcher das äußere Ringelement orientiert ist. Durch diese Verkippung wird der Flächenkontakt zwischen den Gleitlagerflächen bei beiden Gleitlagern reduziert und es kann sogar zu einer Lasttragung in einem lediglich linienförmigen Bereich zwischen den beteiligten Lagerflächen auftreten, wodurch der Verschleiß an den Lagerflächen signifikant erhöht werden kann.

Vor diesem Hintergrund ist es eine Aufgabe der Erfindung auch unter Lasteinfluss einen möglichst großflächigen Kontakt zwischen den beteiligten Gleitlagerflächen der beiden jeweiligen axial beabstandeten Gleitlager zu erzielen. Erfindungsgemäß wird dies dadurch gelöst, dass ein jeweiliges Gleitlager-Pad am Ringelement radial und/oder axial nachgiebig befestigt ist.

Hier ist es demnach der wesentliche Kerngedanke der Erfindung, dass gegenüber dem Stand der Technik, in welchem die jeweiligen Gleitlager-Pads mit dem Ringelement unter Ausbildung eines direkten Kontaktes zwischen diesen beiden Elementen starr verschraubt ist, nun erfindungsgemäß ein jeweiliges Gleitlager-Pad nachgiebig befestigt ist, was bedeutet, dass sich ein Gleitlagerpad relativ zum Ringelement bewegen kann.

Dies kann dadurch erzielt sein, dass die Rückseite des Gleitlager-Pads keinen direkten starren Kontakt zum Ringelement aufweist.

Die Erfindung kann dafür vorsehen, dass ein Gleitlager-Pad unter Verwendung eines Befestigungselementes am Ringelement mittelbar befestigt ist.

Dabei wird unter der mittelbaren Befestigung verstanden, dass das jeweils befestigte Gleitlager-Pad und das Ringelement an welchem es befestigt wird, keinen unmittelbaren Kontakt zueinander haben, sondern die Befestigung unter Zuhilfenahme des Befestigungselementes erfolgt und somit das Befestigungselement die Nachgiebigkeit des Gleitlager-Pads relativ zum Ringelement bewirkt.

In besonders bevorzugter Ausführungsform kann hierfür ein jeweils eingesetztes Befestigungselement federelastisch ausgebildet sein, wie beispielsweise durch Verwendung eines Federstahles zur Ausbildung eines solchen Befestigungselementes.

Bei der Erfindung ist es bevorzugt vorgesehen, dass bei jedem der beiden axial beabstandeten Gleitlagern die in Umfangsrichtung kontinuierliche Gleitlagerfläche am inneren Ringelement ausgebildet ist und die mittels mehreren Gleitlager-Pads segmentweise zusammengesetzte Gleitlagerfläche am äußeren Ringelement angeordnet ist. Grundsätzlich kann diese Ausführung jedoch auch umgekehrt sein. In bevorzugter Ausführungsform sieht die Erfindung vor, dass das Befestigungselement zwischen dem Ringelement und jedem seiner Gleitlager-Pads angeordnet ist, wobei das Befestigungselement ein Festkörpergelenk ausbildet, mittels dem das Gleitlager-Pad relativ zum Ringelement beweglich ist. Ein solches Festkörpergelenk kann z.B. dadurch ausgebildet sein, dass es in sich einen Bereich verminderter Biegesteifigkeit aufweist, gegenüber zwei angrenzenden Bereichen höherer Biegesteifigkeit. Z.B. kann der Bereich verminderter Biegesteifigkeit durch eine Querschnittverringerung gegenüber den angrenzenden Bereichen erzeugt sein. Die Ausbildung eines Festkörpergelenkes ist jedoch nicht auf diese Ausführung beschränkt. Ein Festkörpergelenk kann sich z.B. auch mit oder ohne Querschnittverringerung im Verbindungsbereich zweier unter einem Winkel ungleich Null Grad stehender Schenkel ergeben.

Unter Bezug auf die vorgenannte bevorzugte Ausführungsform kann es hier vorgesehen sein, dass dieses benannte Befestigungselement bevorzugt am äußeren Ringelement angeordnet ist.

Die Erfindung kann hier vorsehen, dass mittels des Befestigungselementes das Gleitlager-Pad um wenigstens eine Achse herum relativ zum Ringelement beweglich ist, an dem das Befestigungselement befestigt ist. Diese Achse liegt in besonders bevorzugter Ausführungsform senkrecht zur Drehachse. Durch die Beweglichkeit um eine solche Achse herum wird erreicht, dass das am Befestigungselement seinerseits wiederum befestigte Gleitlager-Pad gleichzeitig sowohl radial als auch axial nachgiebig am Ringelement befestigt ist, da sich eine Bewegung um die benannte Achse in einer Änderung sowohl der axialen als auch der radialen Position des befestigten Gleitlager-Pads äußert.

Mittels der Erfindung wird erzielt, dass bei auftretenden Lasten, die zu einer Verkippung der Achse der Rotornabe einer Windkraftanlage zur Solldrehachse führt, die durch die Orientierung des äußeren Ringelementes definiert ist, sich die einzelnen jeweils nachgiebig gelagerten Gleitlager-Pads an die verkippte Drehachse anpassen können, so dass ein großflächiger Kontakt zwischen den beteiligten Gleitlagerflächen jeweils erhalten bleibt ohne dass zu dem verschleißträchtigen Linienkontakt zwischen den Gleitlagerflächen kommt.

Da im Stand der Technik die dortigen Gleitlager-Pads vollflächig mit Ihren Rückflächen an einem massiven starren Bereich des Ringelementes anliegen, sind die dortigen Gleitlagerpads in ihrer Position ebenso starr fixiert.

Bei der Erfindung hingegen wird durch die Befestigungselemente bewirkt, dass sich die Gleitlagerpad-Rückseite nicht mittels eines Kontaktes zum Ringelement an diesem abstützt. Vielmehr ist die Konstruktion derart, dass die Gleitlager-Pad-Rückseite und der Teil des Befestigungselementes an dem sie befestigt ist, gegenüber dem Ringelement hohl liegt, also berührungsfrei ist.

Die Erfindung sieht vor, dass ein Befestigungselement durch einen Schenkel ausgebildet ist, der sich vom Ringelement in axialer Richtung unter einem Winkel ungleich Null Grad zur Drehachse wegerstreckt, wobei der Schenkel auf seiner zur Drehachse weisenden Seite das Gleitlager-Pad trägt, insbesondere wobei der Schenkel am Ringelement befestigt oder mit diesem einstückig ist. Bevorzugt entspricht der Winkel zur Drehachse den bereits genannten 30 bis 75 Grad, weiter bevorzugt 35 bis 55 Grad.

Die Erfindung sieht vor, dass ein jeweiliges Befestigungselement ein zum Ringelement separates Teil ist, dass am Ringelement seinerseits befestigt ist.

Die Erfindung kann vorsehen, dass alle Gleitlager-Pads eines Gleitlagers mittels eines gemeinsamen Befestigungselementes an dem jeweiligen Ringelement, insbesondere dem äußeren Ringelement befestigt sind. Hierfür kann beispielsweise ein solches gemeinsames Befestigungselement einen mit dem Ringelement befestigbaren Ringbereich aufweisen, welcher in axialer Richtung und in Richtung zu größer werdenden Radien vorspringende Schenkel aufweist, wobei an einem jeden solchen Schenkel ein Gleitlager-Pad befestigt sein kann.

In einer dem gegenüber bevorzugten Ausführungsform kann die Erfindung jedoch vorsehen, dass entweder jedes Gleitlager-Pad jedes der beiden axial beabstandeten Gleitlager mittels eines eigenes Befestigungselementes am Ringelement befestigt ist oder aber dass alternativ zwei an derselben Umfangsposition angeordnete und in axialer Richtung beabstandete Gleitlader-Pads der beiden Gleitlager auf einem gemeinsamen Befestigungselement befestigt sind. So trägt demnach ein solches erfindungsgemäßes Befestigungselement in der ersten Ausführungsform genau ein Gleitlager-Pad und in der anderen Ausführungsform genau zwei Gleitlager-Pads, insbesondere an sich gegenüberliegenden Seiten des Befestigungselementes.

Allgemein kann die Erfindung somit in bevorzugter konstruktiver Ausgestaltung vorsehen, dass ein jeweiliges Befestigungselement einen ersten Schenkel aufweist, mittels dem es am Ringelement befestigt ist und wenigstens einen zweiten, insbesondere sich axial nach außen erweiternden Schenkel aufweist, der unter einem Winkel ungleich Null Grad an den ersten Schenkel anschließt und an dem ein Gleitlager-Pad befestigt ist. Die Erstreckungsrichtung der Schenkel ist somit verschieden.

Der Winkel ist bevorzugt so gewählt, dass bei einer Befestigung des ersten Schenkels am Ringelement der wenigstens eine benannte zweite Schenkel zur Drehachse den bevorzugten Winkel von 30 bis 75 Grad, weiter bevorzugt 35 bis 55 Grad einnimmt.

Durch den Übergang der beiden Schenkel in einem Winkel zueinander wird bereits erreicht, dass dieser winkelige Übergangsbereich wie ein Festkörpergelenk zwischen den beiden Schenkeln wirkt, so dass insbesondere im Rahmen einer federelastischen Materialausbildung die beiden Schenkel zueinander elastisch bewegbar sind. Ist demnach derjenige Schenkel, der zur Befestigung am Ringelement vorgesehen ist starr mit dem Ringelement verbunden, so wird die Nachgiebigkeit dadurch erreicht, dass derjenige Schenkel mit dem ein Gleitlager-Pad verbunden ist, sich relativ zum Ringelement unter elastischer Verformung nachgiebig bewegen kann. Die Nachgiebigkeit ist dabei bevorzugt derart, dass ausgehend von einer unbelasteten Sollposition ein Schenkel mit dem von ihm getragenen Gleitlager-Pad um die mögliche Achse der Nachgiebigkeit sowohl im Uhrzeigersinn als auch entgegen dem Uhrzeigersinn bewegen kann. Die Nachgiebigkeit ist demnach ausgehend von der unbelasteten Sollposition in beide entgegensetzte Richtungen möglich.

Ein jeweiliges Befestigungselement kann am Ringelement auf jede mögliche Art befestigt sein. Z.B. kann der hierfür vorgesehene zuvor benannte erste Schenkel am Ringelement durch Verschrauben oder Vernieten befestigt sein. Es kann auch eine stoffschlüssige Verbindung vorgesehen sein, z.B. durch Verschweißen des genannten Schenkels am Ringelement.

Ein Befestigungselement kann auch mit dem Ringelement einstückig ausgebildet sein. In diesem Fall ist der genannte erste Schenkel nicht als separates Element erkennbar, sondern nur der zur Gleitlagerpad-Befestigung vorgesehene Schenkel. Dies Ausführung entspricht sodann derjenigen anfänglich beschriebenen einstückigen Ausführung. Das Befestigungselement bildet in dieser einstückigen Ausführung somit einen in axialer Richtung unter einem Winkel zur Drehachse vom Ringelement vorspringenden Schenkel. Der Winkel ist der eingangs genannte Winkel ungleich Null Grad, der die Kegeloberfläche der Gleitlagerflächen definiert.

Unabhängig von der Art der Befestigung des Befestigungselementes am Ringelement ist bevorzugt der zur Befestigung eines Gleitlager-Pads vorgesehene Schenkel eines Befestigungselementes auf seiner vom Gleitlager-Pad wegweisenden Rückseite zum Ringelement anlagefrei. Somit ist also zwischen dieser Rückseite des Schenkels und dem Ringelement ein Freiraum angeordnet.

Ein jeweiliges Befestigungselement kann in der Ausführung, in welcher dieses lediglich ein einziges Gleitlager-Pad trägt einen ersten Schenkel aufweisen, mittels dem es am Ringelement befestigt ist und einen einzigen zweiten Schenkel aufweisen, der unter einem Winkel, bevorzugt einem spitzen Winkel an den ersten Schenkel anschließt und an dem ein Gleitlager-Pad befestigt ist, wobei der am Ringelement befestigte Schenkel an einer axialen Stirnfläche des Ringelementes befestigt ist.

So weist demnach bei dieser Ausführung das bevorzugt äußere Ringelement an den beiden sich gegenüberliegenden axialen Stirnflächen jeweils eine Anzahl von Befestigungselementen auf, wobei die Befestigungselemente an der einen axialen Stirnfläche dem einen der beiden axial beabstandeten Gleitlagern zugeordnet ist und die Befestigungselemente an der anderen axialen Stirnfläche dem anderen der beiden axial beabstandeten Gleitlager zugeordnet ist.

Hierdurch erschließt sich der besondere Vorteil, dass auch die Befestigungsbereiche der Befestigungselemente an den axialen Stirnflächen des Ringelementes auch im Betriebszustand einer Windkraftanlage zugängig sind, so dass Wartungsarbeiten wie zum Beispiel der Austausch verschlissener Gleitlager-Pads besonders einfach möglich ist.

In der anderen bevorzugten Ausführungsform kann es die Erfindung vorsehen, dass ein jeweiliges Befestigungselement einen ersten Schenkel aufweist, mittels dem es am Ringelement befestigt ist und zwei beidseits des ersten Schenkels sich gegenüberliegende zweite Schenkel aufweist, die jeweils unter einem Winkel an den ersten Schenkel anschließen und an denen jeweils ein Gleitlager-Pad befestigt ist, wobei der am Ringelement befestigte Schenkel an einer radialen Innenfläche des Ringelementes befestigt ist.

Der Bereich einer verminderten Biegesteifigkeit liegt bei allen Ausführungen bevorzugt im Bereich des Überganges zwischen erstem und zweitem Schenkel, wo diese in einem Winkel aufeinandertreffen. Dieser Bereich kann ergänzend mit einem geringeren Querschnitt versehen sein, als die daran angrenzenden Schenkel. Dies ist jedoch für die Ausbildung einer elastischen Beweglichkeit zwischen den Schenkeln nicht zwingend nötig.

Die Erfindung kann in einer möglichen Ausführungsform, die nicht Teil der beanspruchten Erfindung ist, vorsehen, dass bei den vorgenannten jedoch auch anderen nicht genannten Ausbildungen der Befestigungselemente ein jeweiliges Gleitlager-Pad mit seiner der Gleitfläche abgewandten Rückseite an dem hierfür vorgesehenen Schenkel des Befestigungselementes vollflächig anliegt.

Bei dieser Ausbildung wird eine Beweglichkeit des Gleitlager-Pads im Wesentlichen definiert durch die Beweglichkeit zwischen den beiden unter einem Winkel ineinander übergehenden Schenkel eines Befestigungselementes. Diese Beweglichkeit ist wie eingangs genannt im Wesentlichen eine Beweglichkeit um eine einzige Achse, die bevorzugt senkrecht zur Drehachse orientiert ist. Im Wesentlichen wird hierdurch bewirkt, dass eine maximale Beweglichkeit des Gleitlager-Pads vornehmlich im axial bezogen auf das Ringelement außenliegenden Bereich des Gleitlager-Pads vorliegt.

Die Erfindung sieht vor, dass ein jeweiliges Gleitlager-Pad auf der der Gleitfläche abgewandten Seite, somit also seiner zum Befestigungselement weisenden Rückseite, insbesondere also zu dessen für die Befestigung des Gleitlager-Pads vorgesehenen Schenkel bereichsweise hohlliegend ist.

Hierdurch wird erzielt, dass ein an dem Befestigungselement befestigtes Gleitlager-Pad sich nicht nur insgesamt zusammen mit dem Schenkel des Befestigungselementes relativ zum Ringelement bewegen kann, sondern dass sich ein befestigtes Gleitlager-Pad auch relativ zum Schenkel des Befestigungselementes bewegen kann, da ein befestigtes Gleitlager-Pad auch in den Bereich des Befestigungselementes bzw. des Schenkels eintreten kann, in welchem es hohlliegend angeordnet ist.

Hier sieht die Erfindung vor, dass das Gleitlager-Pad in einem ersten Teilbereich seiner Rückfläche vollflächig am Schenkel des Befestigungselementes befestigt ist und an einem zweiten Teilbereich seiner Rückfläche berührungslos zum Schenkel angeordnet ist. Beispielsweise kann dies dadurch realisiert sein, dass der Schenkel des Befestigungselementes in seinem dem zweiten Teilbereich gegenüberliegenden Bereich eine Materialverdünnung aufweist gegenüber dem Material im ersten Teilbereich, wobei besonders bevorzugt die beiden benannten Teilbereiche an einer Stufe aneinander angrenzen, deren an den ersten Teilbereich angrenzende Kante senkrecht verläuft zur Drehachse.

So kann ein befestigtes Gleitlager-Pad sowohl um eine erste Festkörpergelenkachse verschwenkt werden, die aufgrund ihrer Anordnung im Übergangsbereich der beiden Schenkel nahe zum Ringelement liegt als auch in einer zweiten Achse verschwenkt werden, die aufgrund ihrer Anordnung im Stufenbereich zwischen den beiden Teilbereichen weiter entfernt zum Ringelement angeordnet ist, so dass sich hierdurch eine verbesserte Anpassung der Gleitlagerfläche eines solchen Gleitlager-Pads an die in der Drehachse verkippt angeordnete gegenüberliegende, insbesondere innere Gleitlagerfläche ergeben kann. Bevorzugt sind hier die beiden Achsen, um die ein Gleitlager-Pad nachgiebig bewegt werden kann parallel zueinander und jeweils somit senkrecht zur Drehachse.

Die bevorzugte Ausführungsform sieht hier vor, dass der erste Teilbereich an dem axial außenliegenden Ende des Befestigungselementes angeordnet ist, um so eine Beabstandung zwischen den beiden nachgiebigen Bereichen zu realisieren. Weiter bevorzugt weist der erste Teilbereich eine kleinere Fläche auf als der zweite Teilbereich, wodurch der vom Ringelement axial entfernt angeordnete Bereich der Nachgiebigkeit axial weiter nach außen verlagert werden kann.

Eine Weiterbildung aller möglichen Ausführungen kann zudem vorsehen, dass die Gleitlager-Pads tragenden Schenkel von zwei in Umfangsrichtung benachbarten Befestigungselementen eines jeweiligen Gleitlagers untereinander, insbesondere somit in Umfangsrichtung verbunden, insbesondere lösbar verbunden sind, bevorzugt in einem axial außen und/oder innen liegenden Bereich. Hierdurch wird erzielt, dass eine auf einen Schenkel eines Befestigungselementes wirkende Last, die zur einer Lageänderung des Gleitlagerpads führt durch die Verbindung auch auf benachbarte Schenkel und deren Gleitlager-Pads übertragen wird, insbesondere somit eine Kopplung der Schenkel und Gleitlager-Pads vorliegt.

Ebenso kann es vorgesehen sein, dass in Umfangsrichtung benachbarte Gleitlager-Pads eine insbesondere lösbare Verbindung untereinander in dieser Umfangsrichtung aufweisen, insbesondere an deren axial außen liegenden Endbereichen oder an den axial innen liegenden Endbereichen, insbesondere dort wo sie zum Schenkel des Befestigungselementes hohl liegen.

Eine solche Verbindung kann bei beiden vorgenannten Ausführungen durch einen Verbindungssteg erfolgen, welcher beidseits mit dem jeweiligen der benachbarten Schenkel oder Pads verbunden ist, z.B. durch Verschrauben.

Die bevorzugten Ausführungsformen werden anhand der nachfolgenden Figuren näher beschrieben:

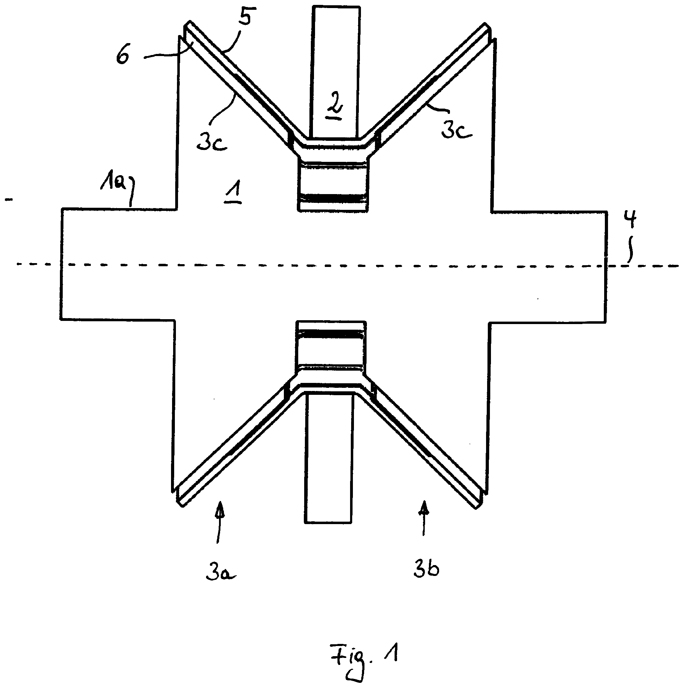

Die Figur 1 zeigt eine Gleitlageranordnung der Erfindung in einer Schnittansicht, in welcher die Schnittebene, hier die Papierebene parallel zur Drehachse 4 liegt und die Drehachse 4 umfasst.

Gezeigt ist hier ein inneres Ringelement 1 und ein äußeres Ringelement 2, wobei hier das innere Ringelement 1 einen Teil der sich drehenden Rotornabe einer Windkraftanlage bilden kann. Die Rotation erfolgt um die Mittenachse der Welle 1a, die der Drehachse 4 entspricht.

Bezogen auf die hier dargestellte Ansicht weist diese Gleitlageranordnung ein erstes Gleitlager 3a auf, welches in der Ansicht axial links vom Ringelement 2 liegt und ein zweites Gleitlager 3b, welches in Ansicht axial rechts vom äußeren Ringelement 2 liegt. Diese beiden Gleitlager 3a und 3b sind somit in Richtung der Drehachse 4 axial beabstandet.

Das innere Ringelement 1 weist für beide axial beabstandeten Gleitlager 3a und 3b kegelabschnittförmige Gleitlagerflächen 3c auf, die in Umfangsrichtung kontinuierlich ausgeführt sind. Die kegelabschnittförmigen Gleitlagerflächen 3c weisen mit Ihren verjüngten Enden aufeinander zu.

Am äußeren Ringelement 2 hingegen sind über Befestigungselemente 5 separate Gleitlagerpads 6 in Umfangsrichtung verteilt nebeneinander angeordnet. Jedes Gleitlagerpad 6 bildet mit seiner Gleitlagerfläche einen Flächenabschnitt eines Kegelstumpfes. Durch die kegelförmige Anordnung legt die Lageranordnung die Position der Nabe in axialer und radialer Richtung fest.

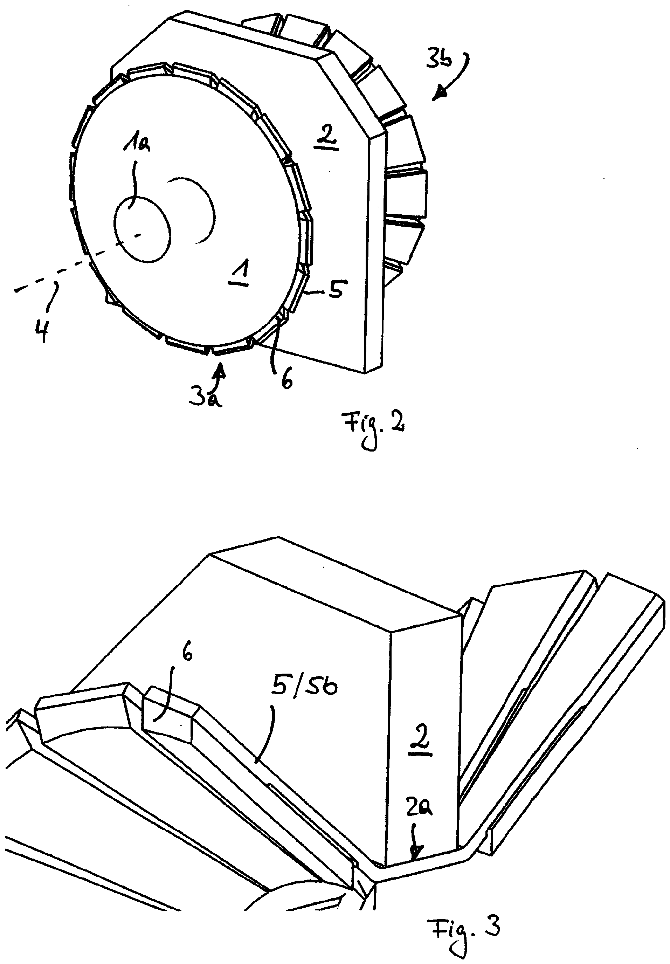

Die Figur 2 zeigt dieselbe Anordnung in perspektivischer Ansicht.

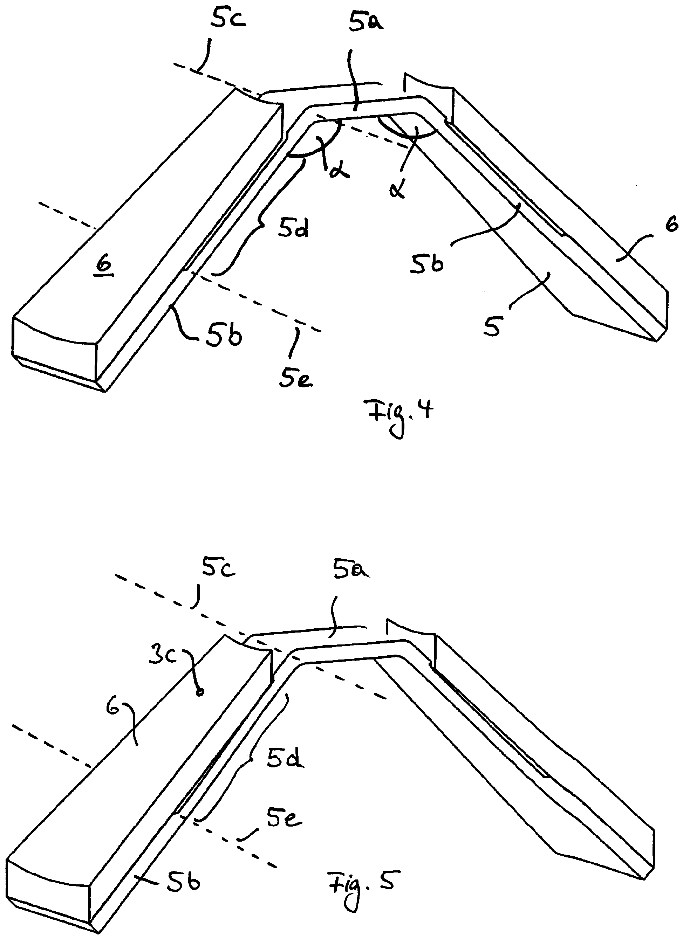

Die Figur 3 zeigt im Ausschnitt eine perspektivische Ansicht lediglich des äußeren Ringelementes 2 mit den daran befestigten Befestigungselementen 5, die jeweils ein Gleitlagerpad 6 tragen. Gemäß der Figur 4, die das erfindungsgemäße zum Ringelement 2 separate Befestigungselement 5 mit daran angeordneten Gleitlagerpads zeigt, ist es erkennbar, dass ein Befestigungselement 5 einen ersten Schenkel 5a aufweist, insbesondere der hier mittig im Befestigungselement 5 angeordnet ist und zwei beidseits daran angeordnete Schenkel 5b, die jeweils unter einem Winkel, insbesondere jeweils unter dem gleichen Winkel α an den Schenkel 5a angrenzen. Der mittige Schenkelbereich 5a dient dazu das Befestigungselement 5 an der radialen inneren Ringfläche 2a (Figur 3) des Ringelementes 2 zu befestigen. Hier ist der mittlere Schenkelbereich 5a im Wesentlichen vollflächig an der Ringfläche 2a z. B. durch Verschrauben befestigt, sodass diese Verbindung starr ist.

Die Schenkel 5b, welche die Gleitlagerpads 6 tragen sind gegenüber der starren Verbindung des Schenkels 5a am Ringelement 2 aufgrund ihrer Elastizität im Übergangsbereich zwischen den Schenkeln 5a und 5b nachgiebig, können sich also im Wesentlichen im Bereich dieses Überganges zwischen den beiden Schenkeln 5a und 5b um eine Achse 5c herum bewegen. Die Anordnung des Gleitlagerpads 6 ist somit im Gegensatz zum Stand der Technik relativ zum Ringelement 2 nicht starr, sondern federelastisch.

In der Figur 3 ist erkennbar, dass sich zwischen dem Schenkel 5b und dem Ringelement 2 ein Freiraum ergibt, so dass das gehaltene Gleitlager-Pad 6 rückseitig nicht am starren Ringelement 2 abgestützt ist.

Besonders die Figur 4 visualisiert weiterhin, dass die Rückseite eines Gleitlagerpads 6 nur in einem axial außenliegenden Teilbereich des jeweiligen Schenkels 5b vollflächig mit dem Schenkel 5b verbunden ist, hier also eine flächige Anlage zwischen der Rückseite und dem Schenkel 5b vorliegt wohingegen im Teilbereich 5d die Rückseite des Gleitlagerpads 6 zum Schenkel 5b anlagefrei ist, insbesondere hier hohl liegt. Dies ist hier dadurch erzielt, dass im Teilbereich 5d die Materialdicke des Schenkels 5b reduziert ist gegenüber dem außenliegenden Teilbereich wobei eine vollflächige Anlage gegeben ist.

Die Figur 5 visualisiert, dass unter einer angenommenen Belastung der Welle und einer elastischen Drehbeweglichkeit um die weitere Achse 5e, die an einem gestuften Übergang zwischen den beiden Teilbereichen gegeben ist, das axial innenseitige Ende eines Gleitlagerpads 6 in den freien Bereich der Materialverdünnung des Teilbereiches 5d eintauchen kann. So kann demnach ein Gleitlagerpad 6 sowohl zusammen mit dem Schenkel 5b relativ zum starr mit dem Ringelement 2a verbundenen Schenkel 5a bewegt werden als auch um die Achse 5e relativ zum Schenkel 5b.

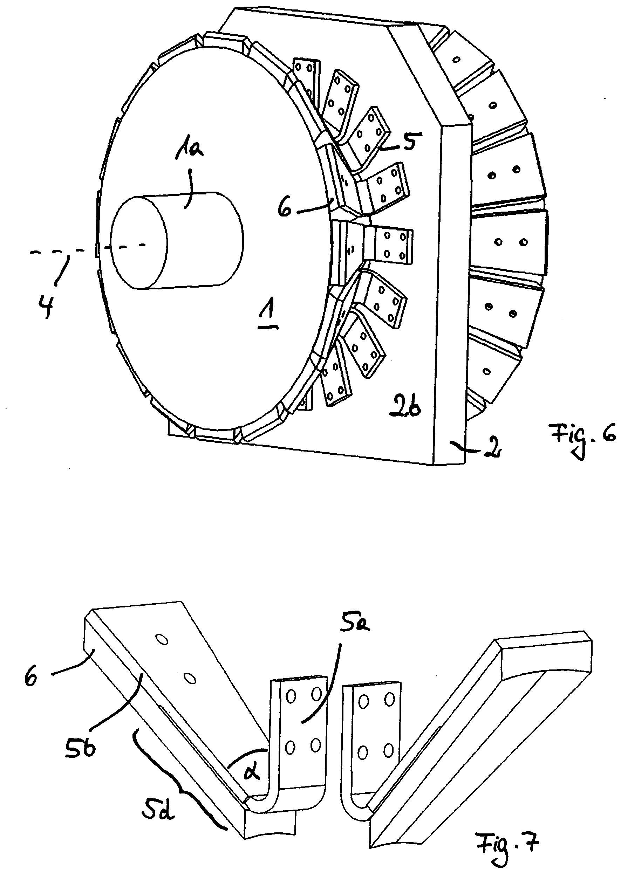

Die Figur 6 zeigt eine andere bevorzugte Ausgestaltung der Erfindung, bei welcher jedem einzelnen Gleitlagerpad 6 ein eigenes Befestigungselement 5 zugeordnet ist. Hier weist ebenso wie bei der Ausführungsform der vorgenannten Figuren gemäß der Figur 7 ein jeweiliges Befestigungselement 5 einen Schenkel 5a auf, mit dem das Befestigungselement 5 am Ringelement 2, hier jedoch an einer axialen Stirnfläche 2b desselben befestigt wird, wobei jedoch nur zu einer Seite dieses Schenkels 5a an diesen unter einem Winkel a, insbesondere einem spitzen Winkel der Schenkel 5b angrenzt. Demnach trägt ein Befestigungselement 5 dieser Ausführungsform nur ein einziges Gleitlagerpad 6.

Auch hier ist im Sinne eines Festkörpergelenkes aufgrund der Elastizität des Materials des Befestigungselementes 5 der Schenkel 5b gegenüber dem Schenkel 5a federnd nachgiebig beweglich, wobei auch diese Ausführung die vorteilhafte Konstruktion realisiert, dass im Teilbereich 5d, der nahe dem Schenkel 5a angeordnet ist, das Gleitlagerpad 6 hohl liegend angeordnet ist, also dort kontaktfrei zum Schenkel 5b ist, sodass in diesen Bereich genauso wie bei der vorhergenannten Ausführung das axial innenliegende Ende des Gleitlagerpads 6 eintreten kann.

Es ergibt sich somit auch bei dieser Ausführungsform eine nachgiebige Lagerung des Gleitlagerpads 6 um zwei im Wesentlichen parallele Achsen, sodass sowohl bei der ersten als auch bei der zweiten Ausführungsform bei einer auftretenden Belastung sich das Gleitlagerpad 6 an die geänderte Achsgeometrie der Rotornabe angleichen kann. So wird ein möglichst großflächiger Kontakt zwischen den sich gegenüberliegenden Gleitlagerflächen erzielt und ein Linienkontakt vermieden.

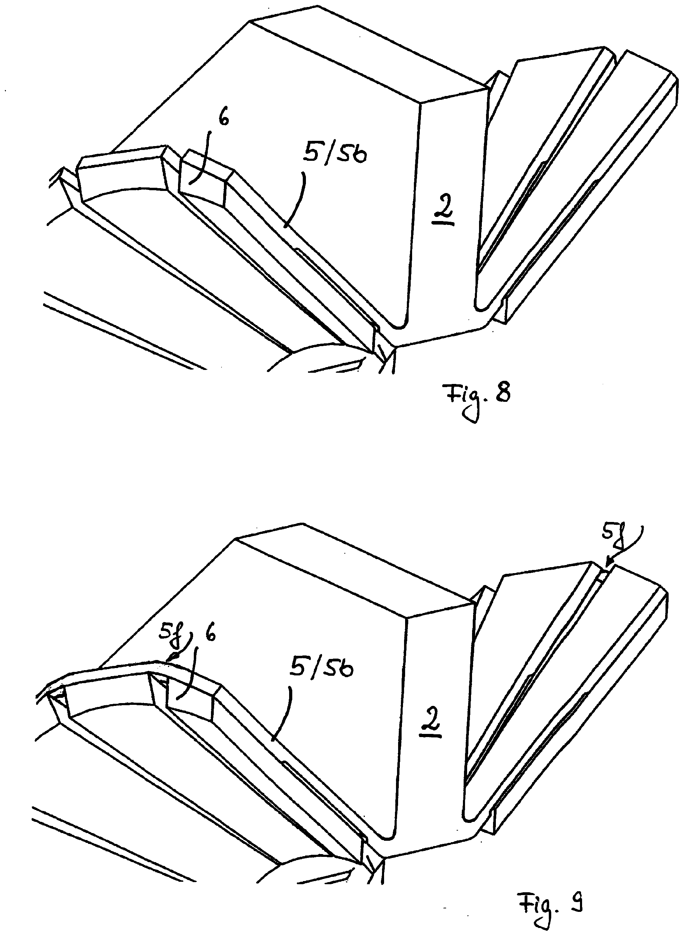

Die Figur 8 visualisiert eine leichte Abwandlung der Ausführung gemäß Figur 3, in welcher das Befestigungselement 5 bzw. dessen das Gleitlager-Pad tragender Schenkel 5b nicht als separates an das Ringelement 2 zu befestigendes Teil ausgebildet ist, sondern der Schenkel 5b ist hier einstückig mit dem Ringelement 2 ausgebildet. Die Ausführung mit einem hohlliegenden Teilbereich ist hier ebenso realisiert.

Figur 9 zeigt eine weitere Abwandlung der Ausführung gemäß Figur 8, die ebenso bei den Ausführungen der Figuren 3 und 6 anwendbar ist. Hier sind die Schenkel 5b von in Umfangsrichtung benachbarten Gleitlager-Pads 6 axial außenliegend mittels Verbindungsstegen 5f untereinander verbunden. Eine Last auf einen Schenkel 5b wird durch diese Kopplung auch direkt auf einen benachbarten Schenkel 5b übertragen.

Die Ausführung führt dazu, dass die gekoppelten Schenkel 5b aller Befestigungselemente 5 einen kegelförmigen Ring ausbilden der in Umfangsrichtung beabstandete jeweils axial verlaufende Schlitze aufweist. Ein jeweilige Schlitz erstreckt sich somit vom Bereich der Anbindung des Schenkel 5b an das Ringelement (egal ob einstückig oder befestigt) bis zum axial außen liegenden Verbindungssteg 5f. Zwischen zwei benachbarten Schlitzen wird der Schenkel 5 gebildet, der ein jeweiliges Gleitlager-Pad 6 trägt.

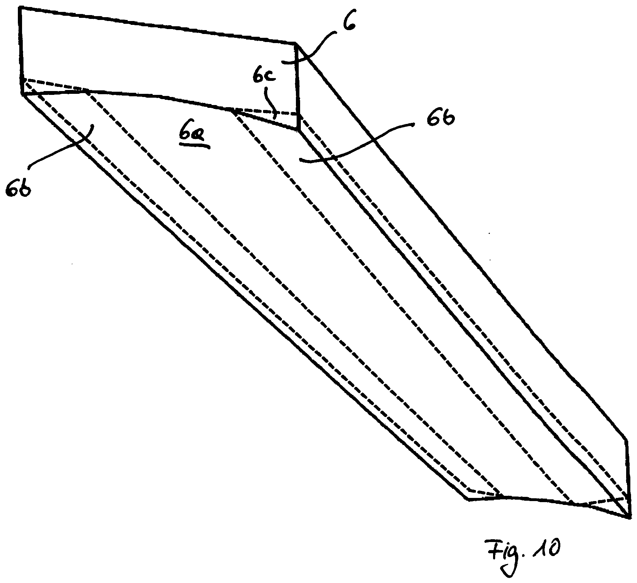

Die Figur 10 visualisiert ein einzelnes Gleitlagerpad 6, wie es in einer möglichen Ausführungsform gemäß den durchgezogenen Linien ausgebildet sein kann und somit mit seiner Gleitlagerfläche 6a im Wesentlichen ein Flächensegment eines Kegels darstellt.

Gemäß weiterhin bevorzugter Ausführungsform kann es vorgesehen sein, dass die mit gestrichelten Linien umrahmten Bereiche 6b von einem Kegelflächenverlauf abweichend d. h. hinter diesem zurückbleibend ausgebildet sein können, wobei die Erfindung vorsehen kann, eine solche Ausführung nur an einer der beiden Kanten oder aber wie hier gezeigt an beiden Kanten vorzusehen. Es werden hierdurch in ihrer Formgebung Einlaufkeile 6c gebildet, die dafür vorgesehen sind an der Gleitlagerung Öl zwischen die sich gegenüberliegenden Gleitlagerflächen einzuziehen.

## Patentansprüche

1. Gleitlagervorrichtung, insbesondere der Lagerung einer Rotornabe einer Windkraftanlage, umfassend
a. ein inneres Ringelement (1), insbesondere welches einen Teil der drehenden Rotorwelle ausbildet und
b. ein äußeres Ringelement (2), insbesondere welches einen Teil des Rotorstators bildet,
c. wobei zwischen dem inneren und äußeren Ringelement (1, 2) zwei axial beabstandete Gleitlager (3a, 3b) ausgebildet sind, deren Gleitlagerflächen (3c), insbesondere betrachtet im Schnitt parallel durch die Drehachse (4), nicht-parallel zueinander und jeweils in einem Winkel ungleich Null Grad und ungleich 90 Grad zur Drehachse (4) angeordnet sind,
d. wobei in jedem der beiden Gleitlager (3a, 3b) eine der zusammenwirkenden Gleitlagerflächen (3c), insbesondere die am inneren Ringelement (1), eine in Umfangsrichtung kontinuierliche Fläche ausbildet und die andere der zusammenwirkenden Gleitlagerflächen (3c), insbesondere die am äußeren Ringelement (2), durch in Umfangsrichtung nebeneinander angeordnete Gleitlager-Pads (6) ausgebildet ist,
e. und wobei ein jeweiliges Gleitlager-Pad (6) am Ringelement (2) radial und/oder axial nachgiebig befestigt ist
f. und wobei die Rückseite des Gleitlager-Pads (6) mittels eines die Nachgiebigkeit bewirkenden, als Schenkel ausgebildeten Befestigungselementes am Ringelement mittelbar befestigt ist, der sich vom Ringelement in axialer Richtung unter einem Winkel ungleich Null Grad zur Drehachse wegerstreckt und auf seiner zur Drehachse weisenden Seite das Gleitlager-Pad (6) trägt, **dadurch gekennzeichnet, dass**
g. die Gleitlager-Pad-Rückseite und der Teil des Schenkels an dem sie befestigt ist, gegenüber dem Ringelement (2) hohl liegt
h. und das Gleitlager-Pad (6) in einem ersten Teilbereich seiner Rückfläche, der am axial außen liegenden Ende des Befestigungselementes angeordnet ist, vollflächig am Schenkel des Befestigungselementes befestigt ist und an einem zweiten Teilbereich seiner Rückfläche berührungslos zum Schenkel angeordnet ist, so dass ein jeweiliges Gleitlager-Pad (6) an seiner zum Befestigungselement weisenden Rückseite bereichsweise hohlliegend ist.

2. Gleitlagervorrichtung nach Anspruch 1, **dadurch gekennzeichnet, dass** ein jeweiliges Gleitlagerpad (6) mittels eines federelastischen Befestigungselementes (5) mittelbar am Ringelement (2) radial und/oder axial nachgiebig befestigt ist.

3. Gleitlagervorrichtung nach einem der vorherigen Ansprüche, **dadurch gekennzeichnet, dass** das Befestigungselement (5) zwischen dem Ringelement (2), insbesondere dem äußeren Ringelement (2), und jedem seiner Gleitlager-Pads (6), angeordnet ist, wobei das Befestigungselement ein Festkörpergelenk bildet, mittels dem das Gleitlager-Pad (6) relativ zum Ringelement (2) beweglich ist, insbesondere mittels dem das Gleitlager-Pad (6) um wenigstens eine Achse (5c), insbesondere senkrecht zur Drehachse (4), relativ zum Ringelement (2) beweglich ist.

4. Gleitlagervorrichtung nach Anspruch 2 oder 3, **dadurch gekennzeichnet, dass** der Schenkel (5b) am Ringelement (2) befestigt oder mit diesem einstückig ist.

5. Gleitlagervorrichtung nach einer der vorherigen Ansprüche, **dadurch gekennzeichnet, dass** jedes Gleitlager-Pad (6) jedes der beiden Gleitlager (3a, 3b) mittels eines eigenen Befestigungselementes (5) am Ringelement (2) befestigt ist.

6. Gleitlagervorrichtung nach einem der vorherigen Ansprüche, **dadurch gekennzeichnet, dass** zwei an derselben Umfangsposition angeordnete und in axialer Richtung beabstandete Gleitlager-Pads (6) der beiden Gleitlager (3a, 3b) auf einem gemeinsamen Befestigungselement (5) befestigt sind.

7. Gleitlagervorrichtung nach einem der vorherigen Ansprüche, **dadurch gekennzeichnet, dass** ein jeweiliges Befestigungselement (5) einen ersten Schenkel (5a) aufweist, mittels dem es am Ringelement (2) befestigt ist und wenigstens einen zweiten, insbesondere sich axial nach außen verbreiternden Schenkel (5b) aufweist, der unter einem Winkel (a) an den ersten Schenkel (5a) anschließt und an dem ein Gleitlager-Pad (6) befestigt ist.

8. Gleitlagervorrichtung nach Anspruch 5, **dadurch gekennzeichnet, dass** ein jeweiliges Befestigungselement (5) einen ersten Schenkel (5a) aufweist, mittels dem es am Ringelement (2) befestigt ist und einen einzigen zweiten Schenkel (5b) aufweist, der unter einem Winkel (α), bevorzugt spitzen Winkel (a) an den ersten Schenkel (5a) anschließt und an dem ein Gleitlager-Pad (6) befestigt ist, wobei der am Ringelement (2) befestigte Schenkel (5a) an einer axialen Stirnfläche (2b) des Ringelementes (2) befestigt ist.

9. Gleitlagervorrichtung nach Anspruch 5, **dadurch gekennzeichnet, dass** ein jeweiliges Befestigungselement (5) einen ersten Schenkel (5a) aufweist, mittels dem es am Ringelement (2) befestigt ist und zwei beidseits des ersten Schenkels (5a) sich gegenüberliegende zweite Schenkel (5b) aufweist, die jeweils unter einem Winkel (α) an den ersten Schenkel (5a) anschließen und an denen jeweils ein Gleitlager-Pad (6) befestigt ist, wobei der am Ringelement (2) befestigte Schenkel (5b) an einer radialen Innenfläche (2a) des Ringelementes (2) befestigt ist.

10. Gleitlagervorrichtung nach einem der vorherigen Ansprüche, **dadurch gekennzeichnet, dass** der Schenkel (5b) des Befestigungselementes (5) in seinem dem zweiten Teilbereich (5d) der Rückfläche des Gleitlager-Pads (6) gegenüberliegenden Bereich eine Materialverdünnung aufweist, gegenüber dem Material im ersten Teilbereich, insbesondere wobei die beiden Teilbereiche an einer Stufe aneinander angrenzen, deren an den ersten Teilbereich angrenzende Kante senkrecht verläuft zur Drehachse (4).

11. Gleitlagervorrichtung nach einem der vorherigen Ansprüche, **dadurch gekennzeichnet, dass** der erste Teilbereich eine kleinere Fläche aufweist als der zweite Teilbereich (5d).

12. Gleitlagervorrichtung nach einem der vorherigen Ansprüche 5 bis 10, **dadurch gekennzeichnet, dass** die Gleitlager-Pads (6) tragenden Schenkel (5b) von zwei in Umfangsrichtung benachbarten Befestigungselementen (5) untereinander verbunden, insbesondere lösbar verbunden sind, bevorzugt in einem axial außen liegenden Bereich (5f).

## Claims

1. Plain-bearing device, in particular for supporting a rotor hub of a wind turbine, comprising
a. an inner ring element (1), in particular which forms part of the rotating rotor shaft, and
b. an outer ring element (2), in particular which forms part of the rotor stator,
c. wherein the inner and outer ring elements (1, 2) have formed between them two axially spaced-apart plain bearings (3a, 3b), of which the plain-bearing surfaces (3c), in particular as seen in the section taken parallel through the axis of rotation (4), are arranged in a non-parallel state in relation to one another and in each case at an angle other than zero degrees, and other than 90 degrees, in relation to the axis of rotation (4),
d. wherein, in each of the two plain bearings (3a, 3b), one of the interacting plain-bearing surfaces (3c), in particular the one on the inner ring element (1), forms a circumferentially continuous surface and the other one of the interacting plain-bearing surfaces (3c), in particular the one on the outer ring element (2), is formed by plain-bearing pads (6) arranged one beside the other in the circumferential direction,
e. and wherein a respective plain-bearing pad (6) is fastened in a radially and/or axially flexible manner on the ring element (2),
f. and wherein the rear side of the plain-bearing pad (6) is fastened on the ring element indirectly by means of a limb-form fastening element which provides the flexibility, extends axially away from the ring element at an angle other than zero degrees in relation to the axis of rotation and carries the plain-bearing pad (6) on its side which is oriented towards the axis of rotation, **characterized in that**
g. the rear side of the plain-bearing pad, and that part of the limb on which it is fastened, forms a clearance in relation to the ring element (2),
h. and in a first sub-region of its rear surface, this first sub-region being arranged at the axially outer end of the fastening element, the plain-bearing pad (6) has its entire surface area fastened on the limb of the fastening element and, on a second sub-region of its rear surface, the plain-bearing pad is arranged in a contactless manner in relation to the limb, and therefore on its rear side, which is oriented towards the fastening element, a respective plain-bearing pad (6) forms a clearance in some regions.

2. Plain-bearing device according to Claim 1, **characterized in that** a respective plain-bearing pad (6) is fastened indirectly, in a radially and/or axially flexible manner, on the ring element (2) by means of a resilient fastening element (5).

3. Plain-bearing device according to either of the preceding claims, **characterized in that** the fastening element (5) is arranged between the ring element (2), in particular the outer ring element (2), and each of its plain-bearing pads (6), wherein the fastening element forms a flexure bearing, by means of which the plain-bearing pad (6) is movable relative to the ring element (2), in particular by means of which the plain-bearing pad (6) is movable about at least one axis (5c), in particular in a direction perpendicular to the axis of rotation (4), relative to the ring element (2).

4. Plain-bearing device according to Claim 2 or 3, **characterized in that** the limb (5b) is fastened on the ring element (2) or is in one piece therewith.

5. Plain-bearing device according to one of the preceding claims, **characterized in that** each plain-bearing pad (6) of each of the two plain bearings (3a, 3b) is fastened on the ring element (2) by means of a dedicated fastening element (5).

6. Plain-bearing device according to one of the preceding claims, **characterized in that** two plain-bearing pads (6), belonging to the two plain bearings (3a, 3b), which are arranged at the same circumferential position and are spaced apart in the axial direction are fastened on a common fastening element (5).

7. Plain-bearing device according to one of the preceding claims, **characterized in that** a respective fastening element (5) has a first limb (5a), by means of which it is fastened on the ring element (2), and at least one second, in particular axially outwardly widening limb (5b), which adjoins the first limb (5a) at an angle (α) and on which a plain-bearing pad (6) is fastened.

8. Plain-bearing device according to Claim 5, **characterized in that** a respective fastening element (5) has a first limb (5a), by means of which it is fastened on the ring element (2), and a single second limb (5b), which adjoins the first limb (5a) at an angle (α), preferably an acute angle (α), and on which a plain-bearing pad (6) is fastened, wherein the limb (5a), which is fastened on the ring element (2), is fastened on an axial end surface (2b) of the ring element (2).

9. Plain-bearing device according to Claim 5, **characterized in that** a respective fastening element (5) has a first limb (5a), by means of which it is fastened on the ring element (2), and two second limbs (5b), which are located opposite one another on either side of the first limb (5a), adjoin the first limb (5a) in each case at an angle (α) and on which a respective plain-bearing pad (6) is fastened, wherein the limb (5b), which is fastened on the ring element (2), is fastened on a radial inner surface (2a) of the ring element (2).

10. Plain-bearing device according to one of the preceding claims, **characterized in that, in that** region of the limb (5b) of the fastening element (5) which is located opposite the second sub-region (5d) of the rear surface of the plain-bearing pad (6), a material of this limb is thinned in relation to the material in the first sub-region, in particular wherein the two sub-regions are adjacent to one another at a step, of which the edge which is adjacent to the first sub-region runs perpendicularly in relation to the axis of rotation (4).

11. Plain-bearing device according to one of the preceding claims, **characterized in that** the first sub-region has a smaller surface area than the second sub-region (5d).

12. Plain-bearing device according to one of the preceding Claims 5 to 10, **characterized in that** the limbs (5b) of two circumferentially adjacent fastening elements (5), these limbs carrying plain-bearing pads (6), are connected to one another, in particular connected in a releasable manner, preferably in an axially outer region (5f) .

## Revendications

1. Dispositif de paliers lisses, notamment palier d'un moyeu de rotor d'une éolienne, comprenant
a. un élément annulaire intérieur (1), notamment qui forme une partie de l'arbre de rotor rotatif, et
b. un élément annulaire extérieur (2), notamment qui forme une partie du stator de rotor,
c. entre l'élément annulaire intérieur et extérieur (1, 2), étant formés deux paliers lisses (3a, 3b) espacés axialement, dont les surfaces de palier lisse (3c), notamment vues en coupe parallèlement à travers l'axe de rotation (4), ne sont pas parallèles l'une à l'autre et sont agencées respectivement à un angle différent de zéro degré et différent de 90 degrés par rapport à l'axe de rotation (4),
d. dans chacun des deux paliers lisses (3a, 3b), une des surfaces de palier lisse en interaction (3c), notamment celle située sur l'élément annulaire intérieur (1), formant une surface continue dans la direction périphérique, et l'autre des surfaces de paliers lisse en interaction (3c), notamment celle située sur l'élément annulaire extérieur (2), étant formée par des coussinets de palier lisse (6) agencés les uns à côté des autres dans la direction périphérique,
e. et un coussinet de palier lisse (6) respectif étant fixé à l'élément annulaire (2) de manière radialement et/ou axialement flexible,
f. et le côté arrière du coussinet de palier lisse (6) étant fixé indirectement à l'élément annulaire au moyen d'un élément de fixation réalisé sous forme de branche, qui assure la flexibilité, qui s'étend à distance de l'élément annulaire en direction axiale à un angle différent de zéro degré par rapport à l'axe de rotation et porte le coussinet de palier lisse (6) sur son côté orienté vers l'axe de rotation, **caractérisé en ce que**
g. le côté arrière de coussinet de palier lisse et la partie de la branche à laquelle celui-ci est fixé est située en creux par rapport à l'élément annulaire (2),
h. et le coussinet de palier lisse (6) est fixé sur toute la surface à la branche de l'élément de fixation dans une première zone partielle de sa surface arrière, qui est agencée à l'extrémité de l'élément de fixation située axialement à l'extérieur, et est agencé sans contact avec la branche au niveau d'une deuxième zone partielle de sa surface arrière, de sorte qu'un coussinet de palier lisse (6) respectif soit situé en creux en zones au niveau de son côté arrière orienté vers l'élément de fixation.

2. Dispositif de paliers lisses selon la revendication 1, **caractérisé en ce qu'**un coussinet de palier lisse (6) respectif est fixé indirectement à l'élément annulaire (2) de manière radialement et/ou axialement flexible au moyen d'un élément de fixation élastique (5).

3. Dispositif de paliers lisses selon l'une quelconque des revendications précédentes, **caractérisé en ce que** l'élément de fixation (5) est agencé entre l'élément annulaire (2), notamment l'élément annulaire extérieur (2), et chacun de ses coussinets de palier lisse (6), l'élément de fixation formant un joint solide, au moyen duquel le coussinet de palier lisse (6) est mobile par rapport à l'élément annulaire (2), notamment au moyen duquel le coussinet de palier lisse (6) est mobile autour d'au moins un axe (5c), notamment perpendiculairement à l'axe de rotation (4), par rapport à l'élément annulaire (2).

4. Dispositif de paliers lisses selon la revendication 2 ou 3, **caractérisé en ce que** la branche (5b) est fixée à l'élément annulaire (2) ou d'un seul tenant avec celle-ci.

5. Dispositif de paliers lisse selon l'une quelconque des revendications précédentes, **caractérisé en ce que** chaque coussinet de palier lisse (6) de chacun des deux paliers lisses (3a, 3b) est fixé à l'élément annulaire (2) au moyen d'un élément de fixation (5) propre.

6. Dispositif de paliers lisses selon l'une quelconque des revendications précédentes, **caractérisé en ce que** deux coussinets de palier lisse (6), agencés à la même position périphérique et espacés en direction axiale, des deux paliers lisses (3a, 3b) sont fixés sur un élément de fixation (5) commun.

7. Dispositif de paliers lisses selon l'une quelconque des revendications précédentes, **caractérisé en ce qu'**un élément de fixation (5) respectif comprend une première branche (5a), au moyen de laquelle il est fixé à l'élément annulaire (2), et comprend au moins une deuxième branche (5b), notamment s'élargissant axialement vers l'extérieur, qui se raccorde à un angle (α) à la première branche (5a) et à laquelle un coussinet de palier (6) est fixé.

8. Dispositif de paliers lisses selon la revendication 5, **caractérisé en ce qu'**un élément de fixation (5) respectif comprend une première branche (5a), au moyen de laquelle il est fixé à l'élément annulaire (2), et une deuxième branche unique (5b), qui est raccordée à la première branche (5a) à un angle (α), de préférence un angle (α) aigu, et à laquelle un coussinet de palier lisse (6) est fixé, la branche (5a) fixé à l'élément annulaire (2) étant fixée à une surface frontale axiale (2b) de l'élément annulaire (2) .

9. Dispositif de paliers lisse selon la revendication 5, **caractérisé en ce qu'**un élément de fixation (5) respectif comprend une première branche (5a), au moyen de laquelle il est fixé à l'élément annulaire (2), et deux deuxièmes branches (5b) en vis-à-vis des deux côtés de la première branche (5a), qui sont chacune raccordées à la première branche (5a) à un angle (α), et auxquelles un coussinet de palier lisse (6) est respectivement fixé, la branche (5b) fixée à l'élément annulaire (2) étant fixée sur une surface intérieure radiale (2a) de l'élément annulaire (2).

10. Dispositif de paliers lisses selon l'une quelconque des revendications précédentes, **caractérisé en ce que** la branche (5b) de l'élément de fixation (5) présente, dans sa zone opposée à la deuxième zone partielle (5d) de la surface arrière du coussinet de palier lisse (6), un amincissement de matériau, par rapport au matériau dans la première zone partielle, les deux zones partielles étant notamment adjacentes l'une à l'autre au niveau d'un gradin, dont le bord adjacent à la première zone partielle s'étend perpendiculairement à l'axe de rotation (4).

11. Dispositif de paliers lisse selon l'une quelconque des revendications précédentes, **caractérisé en ce que** la première zone partielle présente une surface plus petite que la deuxième zone partielle (5d).

12. Dispositif de paliers lisses selon l'une quelconque des revendications 5 à 10 précédentes, **caractérisé en ce que** les branches (5b) portant des coussinets de palier lisse (6) de deux éléments de fixation (5) voisins dans la direction périphérique sont reliées entre elles, notamment sont reliées de manière détachable, de préférence dans une zone (5f) située axialement à l'extérieur.
